# EUROPÄISCHE PATENTSCHRIFT

(11) **EP 3 648 651 B1**
(45) Veröffentlichungstag und Bekanntmachung des Hinweises auf die Patenterteilung: **09.08.2023**
(21) Anmeldenummer: 18731055.2
(22) Anmeldetag: 11.06.2018
(51) Int. Cl.: A47L 15/42, D06F 39/12, D06F 39/00, F25D 23/00, G01C 9/00, G01C 19/00, H04M 11/00, H04M 1/725, G01C 9/06

(54) **NIVELLIEREINRICHTUNG FÜR EIN HAUSHALTSGERÄT, HAUSHALTSGERÄT UND NIVELLIERVERFAHREN FÜR EIN HAUSHALTSGERÄT**
LEVELING DEVICE FOR A DOMESTIC APPLIANCE, DOMESTIC APPLIANCE AND LEVELING METHOD FOR A DOMESTIC APPLIANCE
DISPOSITIF DE NIVELLEMENT POUR UN APPAREIL ÉLECTRO-MÉNAGER, APPAREIL ÉLECTRO-MÉNAGER ET PROCÉDÉ DE NIVELLEMENT POUR UN APPAREIL ÉLECTRO-MÉNAGER

(30) Priorität: 05.07.2017 DE 102017211458
(43) Veröffentlichungstag der Anmeldung: 13.05.2020
(73) Patentinhaber: BSH Hausgeräte GmbH, 81739 München (DE)
(72) Erfinder: MARTIN, Peter, 86666 Burgheim (DE); HALTMAYER, Werner, 91550 Dinkelsbühl (DE)
(86) Internationale Anmeldenummer: PCT/EP2018/065347
(87) Internationale Veröffentlichungsnummer: WO 2019/007635

(56) Entgegenhaltungen:
- CN-A- 106 835 619
- DE-A1-102013 207 897
- DE-U1-202008 005 034
- US-A1- 2004 083 616
- US-A1- 2007 193 047
- US-A1- 2009 017 880
- US-A1- 2015 355 786

## Beschreibung

Die vorliegende Erfindung betrifft eine Nivelliereinrichtung für ein Haushaltsgerät, ein Verfahren zum Nivellieren eines Haushaltsgeräts, ein Haushaltsgerät mit integrierter Nivelliereinrichtung und ein Computerprogrammprodukt.

Haushaltsgeräte, wie Spülmaschinen, Waschmaschinen und/oder Kühlgeräte, werden bei ihrer Erstaufstellung nivelliert, d. h., die Niveaulage einer horizontalen Fläche eines Haushaltsgeräts wird ins Wasser gebracht, um beispielsweise ein Versagen eines Sicherheitssystems des Haushaltsgeräts durch Überlaufen zu vermeiden. Bei einem Trommelgerät, wie einer Waschmaschine oder einer Schleuder, werden durch das Nivellieren zudem Beschädigungen durch Unwuchten vermieden. Zum Nivellieren wird herkömmlich eine Wasserwaage auf dem Haushaltsgerät platziert, und anhand einer Anzeige einer Libelle der Wasserwaage wird die Niveaulage des Haushaltsgeräts durch Verdrehen von Schraubfüßen am Boden des Haushaltsgeräts angepasst. Für eine am Boden arbeitende Bedienperson ist die Libelle der auf dem Haushaltsgerät liegenden Wasserwaage nicht einsehbar. Die Bedienperson steht daher wiederholt auf, um die Libelle abzulesen, und kniet oder legt sich wieder hin, um eine Einstellmaßnahme an den Schraubfüßen durchzuführen, oder sie zieht eine zweite Bedienperson hinzu, die die Libelle der Wasserwaage abliest und Anweisungen an die am Boden arbeitende Bedienperson gibt.

Aus der EP 1 653 027 A1 ist ein Haushaltsgerät mit einem Beschleunigungssensor bekannt. Aus der US 2007/0193047 A1 ist ein mobiles Endgerät mit einer Horizontalitätsanzeigefunktion bekannt. Die CN 106835619 A lehrt eine Waschmaschine mit integrierter Lageerkennungsvorrichtung, Steuervorrichtung und Anzeigevorrichtung, wobei basierend auf einer erkannten Lage eine grafische Installationsanweisung zum Nivellieren der Waschmaschine angezeigt wird. Die US 2009/0017880 A1 und die US 2015/0355786 A1 zeigen jeweils eine mobile Vorrichtung mit einer Wasserwaagenapplikation. Aus der US 2004/0083616A1 ist eine Wasserwaage mit elektrooptischen Komponenten bekannt.

Vor diesem Hintergrund besteht eine Aufgabe der vorliegenden Erfindung darin, das Nivellieren eines Haushaltsgeräts zu verbessern.

Demgemäß wird eine Nivelliereinrichtung für ein Haushaltsgerät vorgeschlagen. Die Nivelliereinrichtung kann auch als Nivellier-Assistenz-Einrichtung oder Nivellierhilfe bezeichnet werden. Die Nivelliereinrichtung umfasst eine Empfangseinheit zum Empfangen eines eine Niveaulage des Haushaltsgeräts angebenden Signals von einem zu dem Haushaltsgerät externen Lagegeber, eine Speichereinheit, in der vorbekannte Daten über das Haushaltsgerät gespeichert sind, eine Bestimmungseinheit zum Bestimmen einer Einstellmaßnahme zum Anpassen der von dem empfangenen Signal angegebenen Niveaulage des Haushaltsgeräts unter Verwendung der Niveaulage sowie der vorbekannten Daten über das Haushaltsgerät und eine Ausgabeeinheit zum Ausgeben einer Handlungsanweisung, die eine Durchführung der bestimmten Einstellmaßnahme anweist.

Mit der vorgeschlagenen Nivelliereinrichtung kann eine beispielsweise am Boden arbeitende Bedienperson vorteilhafterweise eine Handlungsanweisung zum Durchführen der Einstellmaßnahme erhalten, ohne aufzustehen und eine Libelle einer Wasserwaage abzulesen oder eine zweite Bedienperson hinzuzuziehen. Dadurch wird das Nivellieren des Haushaltsgeräts vereinfacht, präziser, und die Effizienz beim Nivellieren des Haushaltgeräts wird gesteigert.

Ferner bedient sich die vorgeschlagene Nivelliereinrichtung zum Bestimmen der von der Handlungsanweisung angewiesenen Einstellmaßnahme eines Signals eines zu dem Haushaltsgerät externen Lagegebers. Somit kann vorteilhafterweise auch ein Haushaltsgerät ohne integrierten Lagegeber nivelliert werden. D.h., die Kosten für das Haushaltsgerät können gering gehalten werden. Der externe Lagegeber kann von der Bedienperson mitgeführt werden und vorteilhafterweise bei einer Vielzahl von Erstinstallationen von Haushaltsgeräten jeweils zum Nivellieren weiterbenutzt werden.

Das Haushaltsgerät ist insbesondere ein wasserführendes Haushaltsgerät und/oder ein Trommelgerät, beispielsweise eine Haushaltsgeschirrspülmaschine, ein Kältegerät, wie ein Kühlschrank, eine Waschmaschine oder ein Trockengerät.

Unter der Niveaulage des Haushaltsgeräts ist insbesondere eine räumliche Winkellage einer ebenen Fläche des Haushaltsgeräts, wie einer Oberfläche oder einer Seitenwandfläche des Haushaltsgeräts, zu verstehen.

Unter Nivellieren ist insbesondere zu verstehen, dass die Niveaulage des Haushaltsgeräts durch geeignete Einstellmaßnahmen derart eingestellt wird, dass die Niveaulage des Haushaltsgeräts einer Sollniveaulage entspricht.

Die Sollniveaulage ist insbesondere eine Niveaulage, bei der das Haushaltsgerät im Wasser ist. Unter "im Wasser" ist zu verstehen, dass die Niveaulage des Haushaltsgeräts horizontal, d.h. senkrecht zu einer Schwerkraftrichtung, bzw. vertikal, d.h. parallel zu einer Schwerkraftrichtung, verläuft.

Der zu dem Haushaltsgerät externe Lagegeber ist insbesondere ein Gyrosensor. Unter "zu dem Haushaltsgerät extern" ist insbesondere zu verstehen, dass der Lagegeber nicht in das Haushaltsgerät eingebaut, integriert oder anderweitig dauerhaft damit verbunden ist, sondern in einer zu dem Haushaltsgerät externen Vorrichtung umfasst sein kann. Die externe Vorrichtung kann beispielsweise von einer Bedienperson, wie einem Installateur, der mit der Erstinstallation mehrerer Haushaltsgeräte betraut ist, mitgeführt werden.

Das Signal gibt die Niveaulage des Haushaltsgeräts insbesondere an, indem es als Signal codierte Informationen transportiert, aus denen sich auf die Niveaulage des Haushaltsgeräts schließen lässt.

Insbesondere kann der Lagegeber in einer externen Vorrichtung umfasst sein und die externe Vorrichtung mit dem Lagegeber kann an dem Haushaltsgerät in einer vordefinierten Referenzlage anordenbar sein. Die externe Vorrichtung kann derart speziell geformt sein, dass sie an einem vorbestimmten Haushaltsgerät in der vordefinierten Referenzlage hochgradig präzise anordenbar ist. Die vordefinierte Referenzlage ist insbesondere eine Niveaulage, die bei korrekt erfolgter Nivellierung des Haushaltsgeräts einer horizontalen Niveaulage entspricht. Beispielsweise kann die externe Vorrichtung in der vordefinierten Referenzlage angeordnet sein, wenn sie auf eine ebene Oberfläche des Haushaltsgeräts gelegt ist. Alternativ hierzu kann die vordefinierte Referenzlage eine Niveaulage sein, die bei korrekt erfolgter Nivellierung des Haushaltsgeräts einer vertikalen Niveaulage entspricht. Beispielsweise kann die externe Vorrichtung in der vordefinierten Referenzlage angeordnet sein, wenn sie beispielsweise mit Magneten oder mit Klebeband bündig an einer Seitenwandfläche des Haushaltsgeräts angebracht ist.

Durch Anordnen der externen Vorrichtung, die den Lagegeber umfasst, an dem Haushaltsgerät in der vordefinierten Referenzlage kann somit eine definierte Beziehung zwischen einer Niveaulage der externen Vorrichtung mit dem Lagegeber und der Niveaulage des Haushaltsgeräts hergestellt werden, so dass ein Signal des Lagegebers, das die Niveaulage der externen Vorrichtung mit dem Lagegeber angibt, als das Signal benutzt werden kann, das die Niveaulage des Haushaltsgeräts angibt.

Das Signal kann von dem Lagegeber auf drahtlose Weise, beispielsweise über WLAN oder Bluetooth, oder drahtgebunden, beispielsweise über eine Leiterbahn, einen Draht oder ein Kabel, an die Nivelliereinrichtung übermittelt werden.

Bei der Einstellmaßnahme kann es sich um einen beliebigen genau bestimmten Vorgang handeln, der mit oder an dem Haushaltsgerät ausführbar ist, um die Niveaulage des Haushaltsgeräts einzustellen, und insbesondere geeignet ist, die Niveaulage des Haushaltsgeräts in die Sollniveaulage oder näher an die Sollniveaulage zu bringen.

Die Bestimmungseinheit kann die Einstellmaßnahme bestimmen, indem sie den Vorgang und/oder Parameter für den Vorgang bestimmt. Die Bestimmungseinheit kann dazu zunächst aus dem empfangenen Signal die Niveaulage des Haushaltsgeräts bestimmen. In einer Variante kann die Bestimmungseinheit dem Signal die Niveaulage des Haushaltsgeräts direkt entnehmen. In einer anderen Variante kann die Bestimmungseinheit die Niveaulage des Haushaltsgeräts aus von dem Signal umfassten Informationen berechnen, beispielsweise durch Drehung um 90 Grad. Anhand der Niveaulage des Haushaltsgeräts kann die Bestimmungseinheit einen Vorgang und/oder Parameter bestimmen, die geeignet sind, um die Niveaulage des Haushaltsgeräts näher an oder in die Sollniveaulage zu überführen. Die Bestimmungseinheit kann dazu beispielsweise trigonometrische Berechnungen durchführen und/oder in einer Tabelle nachschlagen. Bei der Bestimmung können vorbekannte Daten, wie geometrische oder konstruktive Daten, über das Haushaltsgerät berücksichtigt werden. Die vorbekannten Daten können in einer Speichereinheit der Nivelliereinrichtung gespeichert sein.

Die Handlungsanweisung ist insbesondere eine Anweisung, welche die bestimmte Einstellmaßnahme, wie beispielsweise den Vorgang und die Parameter des Vorgangs, derart beschreibt, dass ein menschlicher oder maschineller Adressat, an den die Handlungsanweisung beispielsweise als akustische, optische oder elektrische Signale ausgegeben wird, zum Durchführen der bestimmten Einstellmaßnahme angeleitet, angewiesen oder veranlasst wird.

Eine jeweilige Einheit der Nivelliereinrichtung, insbesondere die Empfangseinheit, die Bestimmungseinheit und/oder die Ausgabeeinheit, kann hardwaretechnisch und/oder softwaretechnisch ausgebildet sein. Bei einer hardwaretechnischen Implementierung kann die jeweilige Einheit als Vorrichtung oder als Teil einer Vorrichtung, zum Beispiel als Computer oder als Mikroprozessor oder als Steuergeräts eines Haushaltsgeräts ausgebildet sein. Bei einer softwaretechnischen Implementierung kann die jeweilige Einheit als Computerprogrammprodukt, als eine Funktion, als eine Routine, als Teil eines Programmcodes oder als ausführbares Objekt ausgebildet sein.

Gemäß einer Ausführungsform umfasst der zu dem Haushaltsgerät externe Lagegeber einen Beschleunigungssensor eines Mobilgeräts.

Anders ausgedrückt handelt es sich bei der zu dem Haushaltsgerät externen Vorrichtung, die den Lagegeber umfasst, um ein Mobilgerät, wie ein Smartphone, ein Phablet oder ein Tablet.

Mit einem Beschleunigungssensor oder Gyrosensor ausgestattete Mobilgeräte sind weit verbreitet und werden von Bedienpersonen, wie Installateuren, aus beruflichen oder privaten Gründen mitgeführt. Ist wie bei der vorliegenden Ausführungsform die Empfangseinheit der vorgeschlagenen Nivelliereinrichtung dazu eingerichtet, ein Signal von einem Beschleunigungssensor oder Gyrosensor eines solchen Mobilgeräts zu empfangen, können vorteilhafterweise die Kosten für die Erstinbetriebnahme eines zu nivellierenden Haushaltsgeräts weiter gesenkt werden, weil keine separaten Lagegeber bereitgestellt zu werden brauchen.

Gemäß einer weiteren Ausführungsform ist das Mobilgerät ein Smartphone.

Das Smartphone kann insbesondere softwaretechnisch - und damit vorteilhafterweise mit besonders geringem Aufwand - durch eine App oder dergleichen dazu eingerichtet sein, ein Signal von einem in das Smartphone integrierten Lagegeber an die Empfangseinheit der Nivelliereinrichtung zu übertragen.

Gemäß einer weiteren Ausführungsform ist die Nivelliereinrichtung zu dem Haushaltsgerät extern.

Insbesondere kann die Nivelliereinrichtung in einer zu dem Haushaltsgerät externen Vorrichtung umfasst sein, die auch den zu dem Haushaltsgerät externen Lagegeber umfasst. In einer Variante können die Nivelliereinrichtung und der Lagegeber in unterschiedlichen, zu dem Haushaltsgerät jeweils externen Vorrichtungen umfasst sein.

Dadurch, dass die Nivelliereinrichtung gemäß der vorliegenden Ausführungsform zu dem Haushaltsgerät extern ist, kann sie im Zusammenspiel mit dem zu dem Haushaltsgerät externen Lagegeber zum Nivellieren des Haushaltsgeräts benutzt werden. Somit ist vorteilhafterweise ein Nivellieren eines Haushaltsgeräts möglich, das nicht speziell zur Verwendung der vorgeschlagenen Nivelliereinrichtung eingerichtet ist, und die Kosten für das Haushaltsgerät können vorteilhafterweise gering gehalten werden.

In der Nivelliereinrichtung gemäß der vorliegenden Ausführungsform können vorbekannte Daten über eine Anzahl unterschiedlicher Haushaltsgerät-Typen gespeichert sein. Eine externe Vorrichtung, welche die Nivelliereinrichtung umfasst, kann eine Benutzerschnittstelle umfassen. Die Nivelliereinrichtung kann dazu eingerichtet ist, von der Benutzerschnittstelle eine Eingabe einer Bedienperson zu empfangen, die den Typ des Haushaltsgeräts angibt, an welcher die externe Vorrichtung durch die Bedienperson angeordnet worden ist. Der angegebene Typ des Haushaltsgeräts kann bei der Bestimmung, beispielsweise dem Berechnen oder Nachschlagen, der Einstellungsmaßnahme durch die Bestimmungseinheit berücksichtigt werden.

Somit kann eine Bedienperson die zu dem Haushaltsgerät externe Nivelliereinrichtung gemäß der vorliegenden Ausführungsform vorteilhafterweise zum Nivellieren einer Anzahl unterschiedlicher Haushaltsgeräte einsetzen.

Gemäß einer weiteren Ausführungsform ist die Nivelliereinrichtung in das Mobilgerät integriert.

Mit anderen Worten handelt es sich bei der zu dem Haushaltsgerät externen Vorrichtung, die den Lagegeber und die Nivelliereinrichtung umfasst, um ein selbes Mobilgerät. Das Mobilgerät kann ein Smartphone sein. Die Nivelliereinrichtung kann insbesondere softwaretechnisch - und damit vorteilhafterweise mit besonders geringem Aufwand - durch eine App oder dergleichen in das Mobilgerät bzw. Smartphone integriert sein.

Somit kann vorteilhafterweise keine spezielle externe Vorrichtung für Lagegeber und Nivelliereinrichtung bereitgestellt werden, sondern es kann ein von der Bedienperson sowieso mitgeführtes Smartphone als die externe Vorrichtung benutzt werden. Das Nivellieren wird weiter vereinfacht und die Kosten für das Nivellieren bzw. Ausrüstung dazu werden vorteilhafterweise gering gehalten.

Gemäß einer weiteren Ausführungsform ist die Nivelliereinrichtung in ein weiteres Mobilgerät integriert.

Anders ausgedrückt sind der Lagesensor und die Nivelliereinrichtung in unterschiedliche externe Vorrichtungen bzw. Mobilgeräte integriert. Die beiden Mobilgeräte können insbesondere drahtlos per WLAN, Bluetooth oder mobilem Datenfunk miteinander kommunizieren, um das Signal von dem Lagegeber an die Empfangseinheit der Nivelliereinrichtung zu übermitteln. Somit kann das Mobilgerät, das den Lagegeber umfasst, z.B. dafür eingerichtet sein, oben auf das Haushaltsgerät gelegt zu werden, um die Niveaulage des Haushaltsgeräts zu ermitteln, während das weitere Mobilgerät, das die Nivelliereinrichtung umfasst, dazu vorgesehen sein kann, am Boden neben dem Haushaltsgerät angeordnet oder von einer Bedienperson gehalten zu werden.

Somit kann die in dem weiteren Mobilgerät umfasste Nivelliereinrichtung gemäß der vorliegenden Ausführungsform in unmittelbarer Nähe zu der am Boden arbeitenden Bedienperson angeordnet werden, so dass die von der Ausgabeeinheit ausgegebenen Handlungsanweisungen für die Bedienperson vorteilhafterweise besonders gut wahrnehmbar sind.

Gemäß einer weiteren Ausführungsform ist das weitere Mobilgerät ein Tablet.

Ein Tablet eignet sich insbesondere vorteilhafterweise als Mobilgerät zur Implementierung der Nivelliereinrichtung, wenn die Handlungsanweisungen visuelle wie z. B. grafische Handlungsanweisungen sind, da solche Handlungsanweisungen auf einem Display des Tablets besser erkennbar sind.

Gemäß einer weiteren Ausführungsform ist die Nivelliereinrichtung in das Haushaltsgerät integriert.

Insbesondere können die Empfangseinheit und die Bestimmungseinheit in eine Steuervorrichtung des Haushaltsgeräts integriert sein. Die Ausgabeeinheit kann in eine Benutzerschnittstelle integriert sein, insbesondere kann sie in einen Lautsprecher des Haushaltsgeräts integriert bzw. mit diesem gekoppelt sein.

Somit ist gemäß der vorliegenden Ausführungsform die Nivelliereinrichtung dem Haushaltsgerät fest zugeordnet. Vorteilhafterweise kann somit das Nivellieren noch effizienter erfolgen, ohne dass eine Bedienperson zunächst einen Typ des Haushaltsgeräts auswählt.

Gemäß einer weiteren Ausführungsform umfasst die Einstellmaßnahme ein Drehen eines von mehreren Schraubfüßen des Haushaltsgeräts um einen bestimmten Drehwinkel und/oder eine bestimmte Anzahl von Umdrehungen in einer bestimmten Drehrichtung.

Gemäß einer weiteren Ausführungsform ist die Handlungsanweisung eine akustische und/oder eine visuelle Handlungsanweisung.

Eine akustische Handlungsanweisung kann insbesondere eine sprachliche Handlungsanweisung wie beispielsweise "Vorderen linken Schraubfuß um zwei Umdrehungen nach rechts drehen" und/oder eine klangliche Handlungsanweisung sein, wie beispielsweise ein wohlklingender Signalton, der ausgegeben wird, wenn die vorbestimmte Sollniveaulage erreicht ist und keine weitere Einstellmaßnahme angewiesen wird.

Die Handlungsanweisung kann auch eine rein sprachliche Handlungsanweisung oder eine rein klangliche Handlungsanweisung oder eine rein visuelle Handlungsanweisung sein.

Eine akustische Handlungsanweisung ist insbesondere vorteilhaft, wenn die Nivelliereinrichtung in dasselbe Mobilgerät integriert ist wie der zu dem Haushaltsgerät externe Lagegeber. Eine am Boden arbeitende Bedienperson kann die akustische Handlungsanweisung vorteilhafterweise erfassen, auch wenn das Mobilgerät auf einer oberen Fläche des Haushaltsgeräts derart angeordnet ist, dass ein Display des Mobilgeräts vom Boden aus nicht einsehbar ist.

Eine visuelle Handlungsanweisung kann insbesondere eine Anzeige auf einem Display oder ein mit einer Leuchtdiode oder einem Blitz eines Mobilgeräts erzeugtes Lichtsignal sein.

Eine visuelle Handlungsanweisung ist insbesondere vorteilhaft, wenn ein die Nivelliereinrichtung, aber nicht den Lagegeber, umfassendes weiteres Mobilgerät derart anordenbar ist, dass es von einer am Boden arbeitenden Bedienperson einsehbar ist.

Gemäß einer weiteren Ausführungsform ist die Handlungsanweisung ein Signal sein, das, wenn es an eine oder mehrere automatische Höhenvorstelleinrichtungen des Haushaltsgeräts ausgegeben wird, geeignet ist, die eine oder die mehreren der automatischen Höhenverstelleinrichtungen dazu zu veranlassen, die bestimmte Einstellmaßnahme automatisch durchzuführen.

Bei der Anzahl von automatischen Höhenverstelleinrichtungen kann es sich jeweils um motorgesteuerte hydraulische Hebeeinrichtungen handeln. Die Ausgabeeinheit kann drahtlos oder drahtgebunden mit den automatischen Höhenverstelleinrichtungen kommunizieren.

Das Nivellieren des Haushaltsgeräts kann somit vorteilhafterweise mit maschineller Präzision und besonders geringem Aufwand erfolgen, indem eine Bedienperson eine externe Vorrichtung, die mindestens den Lagegeber umfasst, an dem Haushaltsgerät in einer vorbestimmten Niveaulage anordnet, kommunikativ mit dem Haushaltsgerät verbindet, und die Ausgabeeinheit der Nivelliereinrichtung die Höhenverstelleinrichtungen des Haushaltsgeräts zum automatischen Durchführen der von der Bestimmungseinheit der Nivelliereinrichtung bestimmten Einstellmaßnahme anweist.

Weiterhin wird ein Computerprogrammprodukt vorgeschlagen, welches auf einer programmgesteuerten Einrichtung die vorgeschlagene Nivelliereinrichtung wie oben erläutert implementiert.

Ein Computerprogrammprodukt, wie z.B. ein Computerprogramm-Mittel, kann beispielsweise als Speichermedium, wie z.B. Speicherkarte, USB-Stick, CD-ROM, DVD, oder auch in Form einer herunterladbaren Datei von einem Server in einem Netzwerk bereitgestellt oder geliefert werden. Dies kann zum Beispiel in einem drahtlosen Kommunikationsnetzwerk durch die Übertragung einer entsprechenden Datei mit dem Computerprogrammprodukt oder dem Computerprogramm-Mittel erfolgen. Bei einem Computerprogrammprodukt kann es sich insbesondere um eine App handeln.

Weiterhin wird ein Haushaltsgerät mit einer in das Haushaltsgerät integrierten Nivelliereinrichtung vorgeschlagen. Die Nivelliereinrichtung weist auf: eine Empfangseinheit zum Empfangen eines eine Niveaulage des Haushaltsgeräts angebenden Signals von einem zu dem Haushaltsgerät externen Lagegeber, eine Speichereinheit, in der vorbekannte Daten über das Haushaltsgerät gespeichert sind, eine Bestimmungseinheit zum Bestimmen einer Einstellmaßnahme zum Anpassen der von dem empfangenen Signal angegebenen Niveaulage des Haushaltsgeräts unter Verwendung der Niveaulage sowie der vorbekannten Daten über das Haushaltsgerät und eine Ausgabeeinheit zum Ausgeben einer Handlungsanweisung, die eine Durchführung der bestimmten Einstellmaßnahme anweist.

Die für die vorgeschlagene Nivelliereinrichtung beschriebenen Ausführungsformen und Merkmale gelten für das vorgeschlagene Haushaltsgerät mit der darin integrierten Nivelliereinrichtung entsprechend.

Weiterhin wird ein Haushaltsgerät mit einer horizontalen Auflagefläche in einem unterhalb einer Tür des Haushaltsgeräts befindlichen Sockelbereich des Haushaltsgeräts vorgeschlagen, wobei die Auflagefläche derart eingerichtet ist, dass eine zu dem Haushaltsgerät externe Vorrichtung mit einem zu dem Haushaltsgerät externen Lagegeber und einer vorgeschlagenen Nivelliereinrichtung wie vorstehend beschrieben in einer vordefinierten Referenzlage auf der Auflagefläche anordenbar ist.

Die horizontale Auflagefläche kann insbesondere als Grundfläche eines quaderförmigen vertieften Fachs in einer Vorderwand des Sockelbereichs des Haushaltsgeräts oder als vorspringende Konsole an der Vorderwand des Sockelbereichs des Haushaltsgeräts ausgebildet sein.

Gemäß dem vorgeschlagenen Haushaltsgerät mit der horizontalen Auflagefläche kann ein Mobilgerät, wie etwa ein Smartphone einer Bedienperson, nahe am Boden des Haushaltsgeräts in unmittelbarer Nähe zu der am Boden arbeitenden Bedienperson angeordnet werden. Somit kann die Bedienperson beim Nivellieren des Haushaltsgeräts Handlungsanweisungen der Ausgabeeinheit der Nivelliereinrichtung wahrnehmen, ohne aufzustehen, und die Bedienperson kann zu Beginn des Nivellierens auch das Mobilgerät in der vordefinierten Referenzlage an dem Haushaltsgerät anordnen oder zu einem späteren Zeitpunkt die Anordnung des Mobilgeräts in der vordefinierten Referenzlage kontrollieren und korrigieren, ohne aufzustehen. Das Nivellieren wird somit vorteilhafterweise noch effizienter gemacht. Außerdem wird vorteilhafterweise ein Anordnen des Mobilgeräts in der vordefinierten Referenzlage auch dann ermöglicht, wenn das Haushaltsgerät keine zugängliche ebene Oberfläche aufweist, wie es beispielsweise der Fall ist, wenn das Haushaltsgerät ein Unterbaugerät ist.

Weiterhin wird ein Verfahren zum Nivellieren eines Haushaltsgeräts mit den folgenden Schritten vorgeschlagen: Empfangen eines eine Niveaulage des Haushaltsgeräts angebenden Signals von einem zu dem Haushaltsgerät externen Lagegeber, Bestimmen einer Einstellmaßnahme zum Anpassen der von dem empfangenen Signal angegebenen Niveaulage des Haushaltsgeräts unter Verwendung der Niveaulage sowie vorbekannter Daten über das Haushaltsgerät und Ausgeben einer Handlungsanweisung, die eine Durchführung der bestimmten Einstellmaßnahme anweist.

Gemäß einer Ausführungsform des vorgeschlagenen Verfahrens wird eine zu dem Haushaltsgerät externe Vorrichtung, welche mindestens den zu dem Haushaltsgerät externen Lagegeber umfasst, in einer vordefinierten Referenzlage an dem Haushaltsgerät angeordnet, und die Einstellmaßnahme gemäß der Handlungsanweisung wird manuell von einer Bedienperson oder automatisch von einer oder mehreren hydraulischen Höhenverstelleinrichtungen des Haushaltsgeräts ausgeführt.

Die für die vorgeschlagene Nivelliereinrichtung beschriebenen Ausführungsformen und Merkmale gelten für das vorgeschlagene Verfahren entsprechend.

Weitere mögliche Implementierungen der Erfindung umfassen auch nicht explizit genannte Kombinationen von zuvor oder im Folgenden bezüglich der Ausführungsbeispiele beschriebenen Merkmale oder Ausführungsformen. Dabei wird der Fachmann auch Einzelaspekte als Verbesserungen oder Ergänzungen zu der jeweiligen Grundform der Erfindung hinzufügen.

Weitere vorteilhafte Ausgestaltungen und Aspekte der Erfindung sind Gegenstand der Unteransprüche sowie der im Folgenden beschriebenen Ausführungsbeispiele der Erfindung. Im Weiteren wird die Erfindung anhand von bevorzugten Ausführungsformen unter Bezugnahme auf die beigelegten Figuren näher erläutert.
- Fig. 1: veranschaulicht eine vorgeschlagene Nivelliereinrichtung,
- Fig. 2: veranschaulicht ein vorgeschlagenes Verfahren,
- Fig. 3: zeigt ein erstes Ausführungsbeispiel, bei dem der Lagegeber und die Nivelliereinrichtung in ein Smartphone integriert sind,
- Fig. 4: zeigt ein Haushaltsgerät mit einer horizontalen Auflagefläche für das Smartphone mit der Nivelliereinrichtung,
- Fig. 5: zeigt ein zweites Ausführungsbeispiel, bei dem der Lagegeber in ein Smartphone und die Nivelliereinrichtung in ein Tablet integriert ist, und
- Fig. 6: zeigt ein drittes Ausführungsbeispiel, bei dem die Nivelliereinrichtung in das zu nivellierende Haushaltsgerät integriert ist.

In den Figuren sind gleiche oder funktionsgleiche Elemente mit denselben Bezugszeichen versehen worden, sofern nichts anderes angegeben ist.

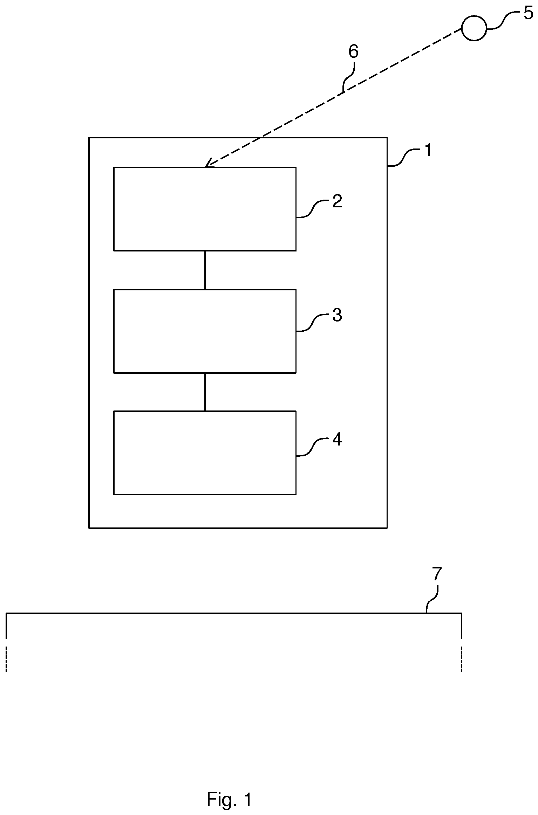

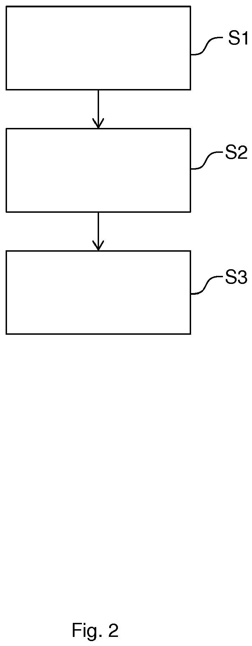

Fig. 1 veranschaulicht eine vorgeschlagene Nivelliereinrichtung 1. Die Nivelliereinrichtung 1 umfasst eine Empfangseinheit 2, eine Bestimmungseinheit 3 und eine Ausgabeeinheit 4. Fig. 1 zeigt ferner schematisch, und ohne eine konkrete räumliche Anordnung festzulegen, ein Haushaltsgerät 7 und einen extern zu dem Haushaltsgerät 7 angeordneten Lagegeber 5. Die Nivelliereinrichtung 1 ist dazu eingerichtet, ein in Fig. 2 veranschaulichtes Verfahren zum Nivellieren des Haushaltsgeräts 7 durchzuführen.

In Schritt S1 (Fig. 2) des Verfahrens empfängt die Empfangseinheit 2 der Nivelliereinrichtung 1 von dem zu dem Haushaltsgerät externen Lagegeber 5 ein Signal 6. Das Signal gibt eine Niveaulage des Haushaltsgeräts 7 an. Der Lagegeber 5 kann extern in einer vordefinierten Referenzlage an dem Haushaltsgerät 7 angeordnet sein, um die Niveaulage des Haushaltsgeräts 7 zu ermitteln, oder er kann die Niveaulage des Haushaltsgeräts 7 auf andere, z.B. photographische, Weise ermitteln. Die Empfangseinheit 2 ermittelt anhand des Signals 6 die Niveaulage des Haushaltsgeräts 7 und gibt diese an die Bestimmungseinheit 3 aus.

In Schritt S2 (Fig. 2) bestimmt die Bestimmungseinheit 3 eine Einstellmaßnahme zum Anpassen der Niveaulage des Haushaltsgeräts 7. Die Bestimmungseinheit 3 greift dazu auf in einer Speichereinheit (nicht gezeigt) der Nivelliereinrichtung 1 gespeicherte geometrische und/oder konstruktive Daten über das Haushaltsgerät 7 zu und ermittelt durch trigonometrische Berechnungen und/oder Nachschlagen in einer Tabelle einen Vorgang, der an dem Haushaltsgerät 7 auszuführen ist, um die Niveaulage des Haushaltsgeräts 7 ins Wasser zu bringen, und/oder Parameter für diesen Vorgang. Die Bestimmungseinheit 3 gibt Daten, die die Einstellmaßnahme, d.h. den Vorgang und/oder die Parameter für den Vorgang, beschreiben, an die Ausgabeeinheit 4 aus.

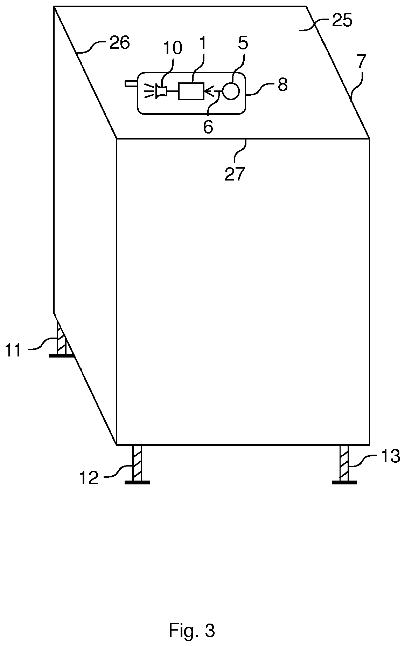

In Schritt S3 (Fig. 3) erzeugt die Ausgabeeinheit 4 eine Handlungsanweisung, die die Durchführung der von der Bestimmungseinheit 3 bestimmten Einstellmaßnahme anweist, und gibt die erzeugte Handlungsanweisung aus.

Im Folgenden werden bevorzugte Ausführungsbeispiele der vorgeschlagenen Nivelliereinrichtung und des vorgeschlagenen Verfahrens beschrieben.

Anhand von Fig. 3 wird ein erstes Ausführungsbeispiel beschrieben, bei dem der Lagegeber 5 und die Nivelliereinrichtung 1 in ein Mobilgerät 8 integriert sind. Fig. 3 zeigt ein Haushaltsgerät 7, das mit Schraubfüßen 11, 12, 13 versehen ist. Ein vierter Schraubfuß ist in der perspektivischen Ansicht aus Fig. 3 verdeckt und daher nicht zu sehen. Das Haushaltsgerät 7 weist eine ebene Oberfläche 25 mit einer ersten Kante 26 und einer zweiten Kante 27 auf.

Zu Beginn eines Nivelliervorgangs platziert eine Bedienperson (nicht gezeigt) das Mobilgerät 8 auf der ebenen Oberfläche 25 des Haushaltsgeräts 7 und ordnet das Mobilgerät 8 dadurch in einer vordefinierten Referenzlage an dem Haushaltsgerät 7 an. Bei dem Mobilgerät 8 handelt es sich im ersten Ausführungsbeispiel um ein Smartphone.

Das Smartphone 8 weist einen zu dem Haushaltsgerät 7 externen Lagegeber 5, wie beispielsweise einen Gyrosensor, auf. Das Smartphone 8 weist ferner einen Lautsprecher 10 auf. Weiterhin umfasst das Smartphone 8 eine softwaretechnisch implementierte Nivelliereinrichtung 1, die mit dem Lagegeber 5 und dem Lautsprecher 10 kommunikativ verbunden ist. Die Struktur der Nivelliereinrichtung 1 entspricht der anhand von Fig. 1 beschriebenen Struktur.

Nachdem die Bedienperson das Smartphone 8 auf der ebenen Oberfläche 25 des Haushaltsgeräts 7 platziert hat, aktiviert sie die Nivelliereinrichtung 1 des Smartphones 8 beispielsweise durch Starten einer App. In einer Variante kann die Bedienperson in der App zudem den Typ des Haushaltsgeräts 7 auswählen, auf dem sie das Smartphone 8 platziert hat. Sodann nimmt die Bedienperson eine Haltung in Bodennähe ein, um die Schraubfüße 11, 12, 13 des Haushaltsgeräts einstellen zu können.

Die Empfangseinheit (2 in Fig. 1) der Nivelliereinrichtung 1 empfängt (Schritt S1 in Fig. 2) ein Signal 6 des Gyrosensors 5, das im vorliegenden Ausführungsbeispiel beispielsweise über eine Leiterbahn auf einer Platine des Smartphones 8 oder über einen internen Draht in dem Smartphone 8 übermittelt wird. Das Signal 6 gibt eine Niveaulage des Smartphones 8 an. Die Empfangseinheit 2 gibt die von dem Signal 6 angegebene Lage des Smartphones 8 als Niveaulage des Haushaltsgeräts 7 an die Bestimmungseinheit 3 aus.

Die Bestimmungseinheit (3 in Fig. 1) der Nivelliereinrichtung 1 bestimmt (Schritt S2 in Fig. 2) eine Abweichung der von der Empfangseinheit (2 in Fig. 1) empfangenen Niveaulage des Haushaltsgeräts 7 von der im Wasser befindlichen, d. h. horizontalen Sollniveaulage des Haushaltsgeräts 7. Sodann bestimmt die Bestimmungseinheit (3 in Fig. 1) eine Einstellmaßnahme, die geeignet ist, die Niveaulage des Haushaltsgeräts 7 in die Sollniveaulage zu überführen.

In einem beispielhaften Fall sei die erste Kante 26 der ebenen Oberfläche 25 bereits im Wasser, während die zweite Kante 27 schräg nach links in der Figur geneigt sei. In diesem beispielhaften Fall bestimmt die Bestimmungseinheit (3 in Fig. 1) der Nivelliereinrichtung 1 als Einstellmaßnahme, dass die Schraubfüße 11 und 12 herauszudrehen sind. In einer Weiterbildung sind in der Nivelliereinrichtung 1 konstruktive Daten über das Haushaltsgerät 7 und die Schraubfüße 11 bis 13 gespeichert. In der Weiterbildung kann die Bestimmungseinheit 3 als Einstellmaßnahme bestimmen, dass die Schraubfüße 11 und 12 um eine Anzahl Umdrehungen und/oder einen Drehwinkel herauszudrehen sind, derart, dass die ermittelte Winkelabweichung von der horizontalen Sollniveaulage kompensiert wird oder im Wesentlichen kompensiert wird. Die bestimmte Einstellmaßnahme umfasst somit als Vorgang das Herausdrehen der Schraubfüße 11 und 12 und in der Weiterbildung als Parameter für den Vorgang eine Anzahl Umdrehungen und/oder einen Drehwinkel. Die Bestimmungseinheit (3 in Fig. 1) gibt Daten, die die bestimmte Einstellmaßnahme beschreiben, an die Ausgabeeinheit (4 in Fig. 1) aus.

Die Ausgabeeinheit (4 in Fig. 1) der Nivelliereinrichtung 1 des ersten Ausführungsbeispiels erzeugt mittels Ton- und/oder Stimmsynthese Daten, die eine akustische Handlungsanweisung zum Durchführen der Einstellmaßnahme repräsentieren, und gibt diese Daten an den Lautsprecher 10 des Smartphones 8 aus, um die akustische Handlungsanweisung auszugeben (Schritt S3 in Fig. 2). Die akustische Handlungsanweisung ist beispielsweise eine sprachliche Handlungsanweisung, in dem beschriebenen beispielhaften Fall beispielsweise "linken vorderen und linken hinteren Schraubfuß herausdrehen" oder, in der Weiterbildung, "linken vorderen und linken hinteren Schraubfuß um je zwei Umdrehungen herausdrehen".

Die am Boden arbeitende Bedienperson nimmt die sprachliche Handlungsanweisung wahr und führt die angewiesene Einstellmaßnahme an den Schraubfüßen 11, 12 des Haushaltsgeräts 7 aus.

Die Schritte S1 bis S3 können mehrfach wiederholt werden. Beispielsweise werden die Schritte S1 bis S3 in festen Zeitabständen, zum Beispiel alle zwei Sekunden, wiederholt. Entsprechend führt die Bedienperson die von den jeweils ausgegebenen Handlungsanweisungen angewiesenen Einstellmaßnahmen aus.

Wird bei einer der Wiederholungen des Schritts S2 bestimmt, dass die Niveaulage der Sollniveaulage entspricht oder im Wesentlichen entspricht und keine weitere Einstellmaßnahme erforderlich ist, wird in Schritt S3 eine beispielsweise klangliche Handlungsanweisung ausgegeben, die der am Boden arbeitenden Bedienperson signalisiert, dass das Nivellieren erfolgreich abgeschlossen ist.

Die Bedienperson kann somit das Haushaltsgerät 7 nivellieren, ohne während des Nivellierens aufzustehen oder eine zweite Bedienperson hinzuzuziehen. Als Hilfsmittel für das Nivellieren wird lediglich ein Smartphone 8 benutzt, welches die Bedienperson aus beruflichen oder privaten Gründen mit sich führt. Somit kann das Nivellieren vorteilhafterweise effizient und mit niedrigen Kosten durchgeführt werden.

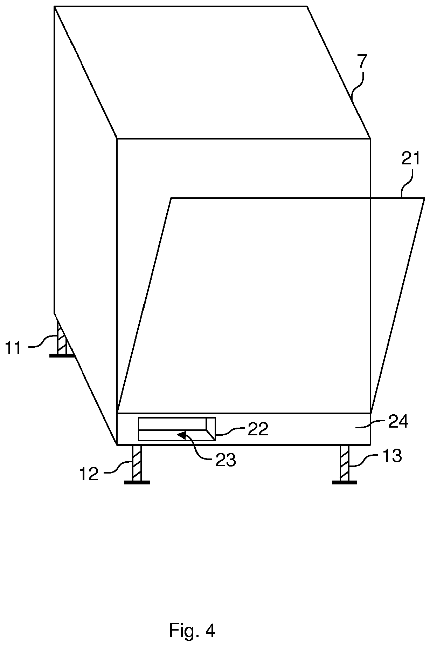

Fig. 4 zeigt als Haushaltsgerät 7 eine Haushaltsgeschirrspülmaschine 7 mit einer Tür 21 und einem unter der Tür 21 angeordneten Sockelbereich mit einer vorderen Wand 24. Bei der Haushaltsgeschirrspülmaschine 7 kann es sich um ein Einbaugerät halten, das keine für die Bedienperson einfach zugängliche ebene Oberfläche aufweist. Der Sockelbereich unter der Tür 21 liegt während des Nivellierens der Haushaltsgeschirrspülmaschine 7 frei und wird nach Abschluss des Nivellierens hinter einer Sockelleiste (nicht gezeigt) verborgen. In einer vorderen Wand 24 des Sockelbereichs ist eine quaderförmige Aussparung 22 vorgesehen. Eine untere Seite der quaderförmigen Aussparung 22 weist eine horizontale Auflagefläche 23 auf. Die quaderförmige Aussparung 22 ist derart dimensioniert, dass ein Mobilgerät 8 darin platzierbar ist.

Dadurch, dass die Haushaltsgeschirrspülmaschine 7 die horizontale Auflagefläche 23 im Sockelbereich aufweist, können die Nivelliereinrichtung 1 und das Nivellierverfahren gemäß dem ersten Ausführungsbeispiel benutzt werden, um die Haushaltsgeschirrspülmaschine 7 zu nivellieren, obwohl diese keine während des Nivellierens zugängliche ebene Oberfläche aufweist. Weiterhin ist die horizontale Auflagefläche 23 in Bodennähe angeordnet, wo eine am Boden an den Schraubfüßen 11, 12, 13 arbeitende Bedienperson ein Display des auf der horizontalen Auflagefläche 23 platzierten Smartphones 8 gut einsehen kann. Dadurch können auch anstelle von oder zusätzlich zu den akustischen Handlungsanweisungen vorteilhafterweise auch visuelle Handlungsanweisungen ausgegeben werden.

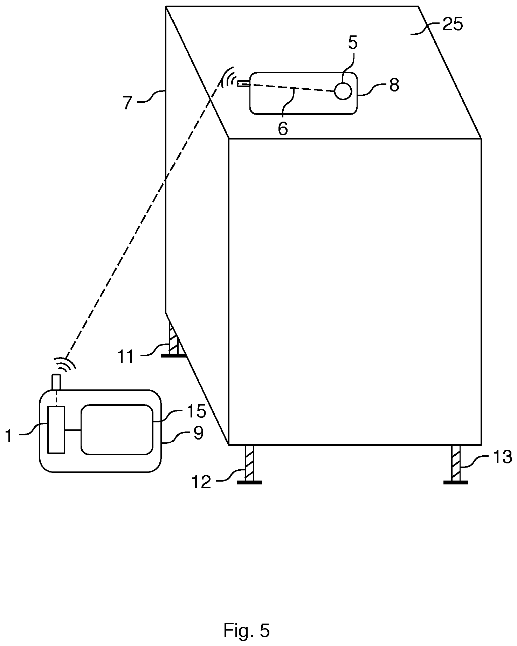

Anhand von Fig. 5 wird ein zweites Ausführungsbeispiel beschrieben, bei dem der Lagegeber 5 in ein Mobilgerät 8 und die Nivelliereinrichtung 1 in ein weiteres Mobilgerät 9 integriert ist. Fig. 5 zeigt ein Mobilgerät 8, bei dem es sich um ein Smartphone handelt und das den Signalgeber 5 umfasst. Das Smartphone 8 ist auf die ebene Oberfläche 25 des Haushaltsgeräts 7 gelegt. Fig. 5 zeigt weiterhin ein weiteres Mobilgerät 9, bei dem es sich um ein Tablet handelt und das die Nivelliereinrichtung 1 sowie ein Display 15 umfasst.

Die Merkmale der Nivelliereinrichtung 1 und des vorgeschlagenen Nivellierverfahrens gemäß dem zweiten Ausführungsbeispiel entsprechen denen gemäß dem ersten Ausführungsbeispiel mit folgenden Unterschieden:
Das Smartphone 8 kommuniziert mit einem drahtlosen Protokoll, wie WLAN oder Bluetooth, mit dem Tablet 9. Auf diese Weise empfängt die Empfangseinheit (2 in Fig. 1) der Nivelliereinrichtung 1 des Tablets 9 in Schritt S1 (Fig. 2) das Signal des Lagegebers 5 des Smartphones 8.

Die Ausgabeeinheit (4 in Fig. 1) der Nivelliereinrichtung 1 erzeugt in Schritt S3 (Fig. 2) keine akustische, sondern eine visuelle, zum Beispiel textuelle und/oder grafische, Handlungsanweisung und gibt diese auf dem Display 15 des Tablets 9 aus. Bei den grafischen Handlungsanweisungen handelt es sich beispielsweise um Bilder, die das Auffinden der Schraubfüße 11, 12, 13 erleichtern, und oder um Bilderserien oder Videos, die das Durchführen der angewiesenen Einstellmaßnahme veranschaulichen.

Gemäß dem zweiten Ausführungsbeispiel wird zu Beginn des Nivelliervorgangs das Smartphone 8 mit dem Positionsgeber 5 auf einer ebenen Oberfläche 25 des Haushaltsgeräts 7 angeordnet und dadurch in die vordefinierte Referenzlage relativ zu der Niveaulage des Haushaltsgeräts 7 gebracht. Das Tablet 9 mit der darin umfassten Nivelliereinrichtung 1 dagegen kann beliebig angeordnet werden und beispielsweise auf den Boden gelegt oder von der Bedienperson in der Hand gehalten werden, derart, dass das Display 15 für die Bedienperson beim Arbeiten am Boden einsehbar ist.

Somit kann unter Verwendung eines Smartphones 8 das Signal 6 für die Niveaulage des Haushaltsgeräts 7 erhalten werden, und unter Verwendung eines weiteren Mobilgeräts, wie des Tablets 9, können besonderes vorteilhafte, detaillierte textuelle und/oder grafische Handlungsanweisungen ausgegeben werden. Dabei werden als Hilfsmittel für den Nivelliervorgang ein Tablet 9 und ein Smartphone 8 benutzt, die von einer Bedienperson mitgeführt und für eine Vielzahl von Nivelliervorgängen und andere Aufgaben benutzt werden können, wodurch Kosten gespart werden.

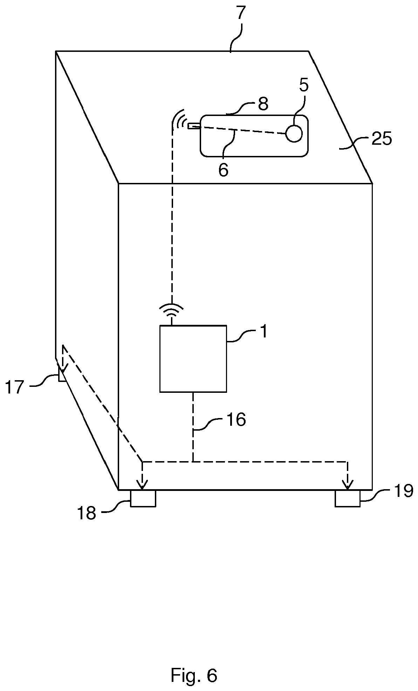

Anhand von Fig. 6 wird ein drittes Ausführungsbeispiel beschrieben. Fig. 6 zeigt ein Haushaltsgerät 7, das anstelle von Schraubfüßen hydraulische Hebeeinrichtungen 17, 18, 19 aufweist. Eine vierte Hebeeinrichtung ist von der perspektivischen Ansicht in Fig. 6 verdeckt. Die hydraulischen Hebeeinrichtungen 17, 18, 19 können durch ein elektrisches Signal 16 einzeln angesteuert und jeweils einzeln zum Heben oder Senken veranlasst werden. Somit bildet eine jeweilige hydraulische Hebeeinrichtung 17, 18, 19 in Kombination mit einem zugehörigen (nicht gezeigten) Steuergerät eine automatische Höhenverstelleinrichtung 17, 18, 19.

Die Merkmale der Nivelliereinrichtung 1 entsprechen den Merkmalen der Nivelliereinrichtung 1 gemäß dem zweiten Ausführungsbeispiel mit folgenden Unterschieden:
Bei dem Haushaltsgerät 7 aus Fig. 6 ist die Nivelliereinrichtung 1 in eine Steuervorrichtung (nicht gezeigt) des Haushaltsgeräts 7 integriert.

Dadurch, dass die Nivelliereinrichtung 1 in das Haushaltsgerät 7 integriert ist, ist vorteilhafterweise ein Auswählen des Typs des Haushaltsgeräts 7 durch eine Bedienperson wie bei dem ersten und dem zweiten Ausführungsbeispiel bei dem dritten Ausführungsbeispiel nicht erforderlich. Die Nivelliereinrichtung 1 kann speziell an die konstruktiven, geometrischen und anderen Eigenschaften des Haushaltsgeräts 7 angepasst sein.

Die Bedienperson platziert zu Beginn des Nivelliervorgangs das Smartphone 8 auf der ebenen Oberfläche 25 des Haushaltsgeräts 7 und koppelt das Smartphone 8 beispielsweise per Bluetooth kommunikativ mit der in das Haushaltsgerät 7 integrierten Nivelliereinrichtung 1. In Reaktion darauf beginnt die Nivelliereinrichtung 1 mit der Durchführung des in Fig. 2 veranschaulichten Nivellierverfahrens. Die Merkmale des Nivellierverfahrens gemäß dem dritten Ausführungsbeispiel entsprechend den Merkmalen des Nivellierverfahrens gemäß dem ersten und zweiten Ausführungsbeispiel mit folgendem Unterschied:
In Schritt S3 (Fig. 2) erzeugt die Ausgabeeinheit (4 in Fig. 1) der Nivelliereinrichtung 1 Handlungsanweisungen in Form elektrischer Signale 16. Die Nivelliereinrichtung 1 gibt diese Signale 16 über eine haushaltsgerätinterne drahtgebundene oder drahtlose Verbindung an eine jeweilige Steuereinheit (nicht gezeigt) der automatischen Höhenverstelleinrichtungen 17, 18, 19 aus. Dadurch veranlasst die Nivelliereinrichtung 1, dass eine oder mehrere einzelne der automatischen Höhenverstelleinrichtungen 17, 18, 19 die von der Bestimmungseinheit (3 in Fig. 1) bestimmte Einstellmaßnahme automatisch durchführen.

Somit kann vorteilhafterweise die Bedienperson das Nivellieren durchführen, indem sie lediglich das Smartphone 8 auf dem Haushaltsgerät 7 platziert und kommunikativ mit diesem koppelt, ohne dabei manuelle Arbeiten am Boden durchzuführen.

Obwohl die vorliegende Erfindung anhand von Ausführungsbeispielen beschrieben wurde, ist sie vielfältig modifizierbar.

Insbesondere sind Kombinationen der Merkmale der beschriebenen Ausführungsbeispiele denkbar.

So kann die in das Haushaltsgerät 7 integrierte Nivelliereinrichtung 1 gemäß dem dritten Ausführungsbeispiel auch bei einem Haushaltsgerät 7 mit Schraubfüßen 11, 12, 13 eingesetzt werden und akustische und/oder visuelle Handlungsanweisungen ausgeben, die eine Bedienperson zum Durchführen einer Einstellmaßnahme an Schraubfüßen 11, 12, 13 des Haushaltsgeräts 7 anweisen.

Ebenso kann die zu dem Haushaltsgerät 7 externe Nivellierreinrichtung 1 gemäß dem ersten und zweiten Ausführungsbeispiel auch bei einem Haushaltsgerät 7 mit einer oder mehreren automatischen Höhenverstelleinrichtungen eingesetzt werden. In dieser Variante wird die externe Nivelliereinrichtung 1 kommunikativ mit einer Steuervorrichtung (nicht gezeigt) des Haushaltsgeräts gekoppelt.

Die Einstellmaßnahme kann das Verdrehen einer anderen Anzahl als drei oder vier Schraubfüße bzw. das Betätigen einer anderen Anzahl von Höhenverstelleinrichtungen umfassen. Die Anzahl kann insbesondere auch eins sein. Die Einstellmaßnahme kann ferner andere Maßnahmen als das Verdrehen von Schraubfüßen oder das Betätigen einer automatischen Höhenverstelleinrichtung umfassen. Denkbar ist beispielsweise ein Anbringen von Unterlegscheiben, ein Ein- und Ausfahren von Füßen auf anderem Wege als durch Schrauben beispielsweise durch Rasten, oder ein Drücken eines Knopfs an einer manuell zu betätigenden hydraulischen Hebeeinrichtung für eine bestimmte Zeitdauer. Die Einstellmaßnahme kann auch eine Maßnahme umfassen, die an einer anderen Vorrichtung als an dem Haushaltsgerät durchgeführt wird, sofern diese Maßnahme geeignet ist, die Niveaulage des Haushaltsgeräts anzupassen, beispielsweise an einem Möbelstück, in welches das Haushaltsgerät eingesetzt oder eingebaut ist.

Die horizontale Auflagefläche 23 des Haushaltsgeräts aus Fig. 3 kann nicht als untere Fläche einer Aussparung 22, sondern als Oberfläche einer vorspringenden Konsole ausgebildet sein.

Der zu dem Haushaltsgerät externe Lagegeber 5 und/oder die zu dem Haushaltsgerät 7 externe Nivelliereinrichtung 1 können nicht in einem Mobilgerät 8, sondern als Teile einer speziell angefertigten und geformten externen Vorrichtung 8 ausgeführt sein. Eine Auflagefläche 24, eine ebene Oberfläche 25 und/oder eine Aussparung 22 an dem Haushaltsgerät 7 können passend zu der externen Vorrichtung ebenfalls speziell geformt sein. Auf diese Weise kann vorteilhaft ein besonders präzises Anordnen der externen Vorrichtung mit dem Lagegeber 5 in der vordefinierten Referenzlage zu Beginn des Nivellierverfahrens sichergestellt werden.

### Verwendete Bezugszeichen:

- 1: Nivelliereinrichtung
- 2: Empfangseinheit
- 3: Bestimmungseinheit
- 4: Ausgabeeinheit
- 5: Lagegeber
- 6: Signal
- 7: Haushaltsgerät
- 8: Smartphone
- 9: Tablet
- 10: Lautsprecher
- 11-13: Schraubfüße
- 15: Display
- 16: Signal
- 17-19: hydraulische Hebeeinrichtungen
- 21: Tür
- 22: Aussparung
- 23: Auflagefläche
- 24: Vordere Wand eines Sockelbereichs
- 25: ebene Oberfläche
- 26: erste Kante
- 27: zweite Kante
- S1-S3: Verfahrensschritte

## Patentansprüche

1. Nivelliereinrichtung (1) für ein Haushaltsgerät (7) mit einer Empfangseinheit (2) zum Empfangen eines eine Niveaulage des Haushaltsgeräts (7) angebenden Signals (6) von einem zu dem Haushaltsgerät (7) externen Lagegeber (5), einer Speichereinheit, in der vorbekannte Daten über das Haushaltsgerät (7) gespeichert sind, einer Bestimmungseinheit (3) zum Bestimmen einer Einstellmaßnahme zum Anpassen der von dem empfangenen Signal (6) angegebenen Niveaulage des Haushaltsgeräts (7) unter Verwendung der Niveaulage sowie der vorbekannten Daten über das Haushaltsgerät (7) und einer Ausgabeeinheit (4) zum Ausgeben einer Handlungsanweisung, die eine Durchführung der bestimmten Einstellmaßnahme anweist.

2. Nivelliereinrichtung nach Anspruch 1, wobei der zu dem Haushaltsgerät (7) externe Lagegeber (5) einen Beschleunigungssensor eines Mobilgeräts (8) umfasst.

3. Nivelliereinrichtung nach Anspruch 2, wobei das Mobilgerät (8) ein Smartphone ist.

4. Nivelliereinrichtung nach einem der Ansprüche 1 bis 3, wobei die Nivelliereinrichtung (1) zu dem Haushaltsgerät (7) extern ist.

5. Nivelliereinrichtung nach Anspruch 4, wobei die Nivelliereinrichtung (1) in das Mobilgerät (8) integriert ist.

6. Nivelliereinrichtung nach Anspruch 4, wobei die Nivelliereinrichtung (1) in ein weiteres Mobilgerät (9) integriert ist.

7. Nivelliereinrichtung nach Anspruch 6, wobei das weitere Mobilgerät (9) ein Tablet ist.

8. Nivelliereinrichtung nach einem der Ansprüche 1 bis 7, wobei die Einstellmaßnahme ein Drehen eines von mehreren Schraubfüßen (11, 12, 13) des Haushaltsgeräts (7) um einen bestimmten Drehwinkel und/oder eine bestimmte Anzahl von Umdrehungen in einer bestimmten Drehrichtung umfasst.

9. Nivelliereinrichtung nach einem der Ansprüche 1 bis 8, wobei die Handlungsanweisung eine akustische und/oder eine visuelle Handlungsanweisung ist.

10. Nivelliereinrichtung nach einem der Ansprüche 1 bis 7, wobei die Handlungsanweisung ein Signal (16) ist, das, wenn es an eine oder mehrere automatischen Höhenvorstelleinrichtungen (17, 18, 19) des Haushaltsgeräts (7) ausgegeben wird, geeignet ist, die eine oder die mehreren der automatischen Höhenverstelleinrichtungen (17, 18, 19) dazu zu veranlassen, die bestimmte Einstellmaßnahme automatisch durchzuführen.

11. Computerprogrammprodukt, welches auf einer programmgesteuerten Einrichtung eine Nivelliereinrichtung nach einem der Ansprüche 1 bis 10 implementiert.

12. Haushaltsgerät (7) mit einer in das Haushaltsgerät integrierten Nivelliereinrichtung (1) nach einem der Ansprüche 1 bis 10.

13. Verfahren zum Nivellieren eines Haushaltsgeräts (7) durch eine Nivelliereinrichtung nach einem der Ansprüche 1 bis 10 mit den Schritten: Empfangen (S1) eines eine Niveaulage des Haushaltsgeräts (7) angebenden Signals (6) von einem zu dem Haushaltsgerät (7) externen Lagegeber, Bestimmen (S2) einer Einstellmaßnahme zum Anpassen der von dem empfangenen Signal (6) angegebenen Niveaulage des Haushaltsgeräts (7) unter Verwendung der Niveaulage sowie vorbekannter Daten über das Haushaltsgerät (7) und Ausgeben (S3) einer Handlungsanweisung, die eine Durchführung der bestimmten Einstellmaßnahme anweist.

14. Verfahren zum Nivellieren eines Haushaltsgeräts nach Anspruch 13, wobei eine zu dem Haushaltsgerät (7) externe Vorrichtung (8), welche mindestens den zu dem Haushaltsgerät (7) externen Lagegeber (5) umfasst, in einer vordefinierten Referenzlage an dem Haushaltsgerät (7) angeordnet wird und die Einstellmaßnahme gemäß der Handlungsanweisung manuell von einer Bedienperson oder automatisch von einer oder mehreren hydraulischen Höhenverstelleinrichtungen (17, 18, 19) des Haushaltsgeräts (7) ausgeführt wird.

## Claims

1. Levelling facility (1) for a household appliance (7) having a receiving unit (2) for receiving a signal (6), which indicates a level position of the household appliance (7), from a position encoder (5) that is external to the household appliance (7), a storage unit in which previously known data regarding the household appliance (7) is stored, a determining unit (3) for determining an adjusting measure for adapting the level position of the household appliance (7), which is indicated by the signal (6) that is received, using the level position and also the previously known data regarding the household appliance (7) and an output unit (4) for outputting a handling instruction that instructs an implementation of the adjusting measure that is determined.

2. Levelling facility according to claim 1, wherein the position encoder (5), which is external to the household appliance (7), comprises an acceleration sensor of a mobile device (8).

3. Levelling facility according to claim 2, wherein the mobile device (8) is a smartphone.

4. Levelling facility according to one of claims 1 to 3, wherein the levelling facility (1) is external to the household appliance (7).

5. Levelling facility according to claim 4, wherein the levelling facility (1) is integrated into the mobile device (8).

6. Levelling facility according to claim 4, wherein the levelling facility (1) is integrated into a further mobile device (9).

7. Levelling facility according to claim 6, wherein the further mobile device (9) is a tablet.

8. Levelling facility according to one of claims 1 to 7, wherein the adjusting measure comprises a rotation of one of multiple screw feet (11, 12, 13) of the household appliance (7) about a determined angle of rotation and/or a determined number of rotations in a determined direction of rotation.

9. Levelling facility according to one of claims 1 to 8, wherein the handling instruction is an acoustic and/or a visual handling instruction.

10. Levelling facility according to one of claims 1 to 7, wherein the handling instruction is a signal (16) that, if it is output to one or more automatic height adjusting facilities (17, 18, 19) of the household appliance (7), is suitable for prompting one or more of the automatic height adjusting facilities (17, 18, 19) so as to automatically perform the adjusting measure that is determined.

11. Computer program product that implements a levelling facility according to one of claims 1 to 10 on a program-controlled facility.

12. Household appliance (7) having a levelling facility (1) according to one of claims 1 to 10, which is integrated into the household appliance.

13. Method for levelling a household appliance (7) by a levelling facility according to one of claims 1 to 10 having the steps: receiving (S1) a signal (6), which indicates a level position of the household appliance (7), from a position encoder that is external to the household appliance (7), determining (S2) an adjusting measure for adapting the level position of the household appliance (7), which is indicated by the signal that is received, using the level position and also previously known data regarding the household appliance (7) and outputting (S3) a handling instruction that instructs an implementation of the adjusting measure that is determined.

14. Method for levelling a household appliance according to claim 13, wherein an apparatus (8) that is external to the household appliance (7) and comprises at least the position encoder (5) that is external to the household appliance (7) is arranged in a predefined reference position on the household appliance (7) and the adjusting measure is performed in accordance with the handling instruction manually by an operator or automatically by one or more hydraulic height adjusting facilities (17, 18, 19) of the household appliance (7).

## Revendications

1. Dispositif de nivellement (1) pour un appareil ménager (7) avec une unité de réception (2) pour la réception d'un signal (6) indiquant un positionnement de niveau de l'appareil ménager (7) issu d'un codeur de position (5) externe à l'appareil ménager (7), une unité de mémoire dans lequel sont enregistrées des données préalablement connues au sujet de l'appareil ménager (7), une unité de détermination (3) pour la détermination d'une mesure de réglage pour l'adaptation du positionnement de niveau de l'appareil ménager (7) indiqué par le signal (6) reçu, en utilisant le positionnement de niveau ainsi que des données préalablement connues au sujet de l'appareil ménager (7) et une unité d'émission (4) pour l'émission d'une instruction de manipulation, qui présente une réalisation de la mesure de réglage déterminée.

2. Dispositif de nivellement selon la revendication 1, dans lequel le codeur de position (5) externe à l'appareil ménager (7) comprend un capteur d'accélération d'un appareil mobile (8).

3. Dispositif de nivellement selon la revendication 2, dans lequel l'appareil mobile (8) est un smartphone.

4. Dispositif de nivellement selon l'une des revendications 1 à 3, dans lequel le dispositif de nivellement (1) est externe à l'appareil ménager (7).

5. Dispositif de nivellement selon la revendication 4, dans lequel le dispositif de nivellement (1) est intégré à l'appareil mobile (8).

6. Dispositif de nivellement selon la revendication 4, dans lequel le dispositif de nivellement (1) est intégré à un appareil mobile supplémentaire (9).

7. Dispositif de nivellement selon la revendication 6, dans lequel l'appareil mobile supplémentaire (9) est une tablette.

8. Dispositif de nivellement selon l'une des revendications 1 à 7, dans lequel la mesure de réglage comprend le fait de tourner l'un parmi plusieurs pieds vissés (11, 12, 13) de l'appareil ménager (7) selon un angle de rotation déterminé et/ou d'un nombre déterminé de tours dans un sens de rotation déterminé.

9. Dispositif de nivellement selon l'une des revendications 1 à 8, dans lequel l'instruction de manipulation est une instruction de manipulation sonore et/ou visuelle.

10. Dispositif de nivellement selon l'une des revendications 1 à 7, dans lequel l'instruction de manipulation est un signal (16) qui, lorsqu'il est émis à un ou plusieurs dispositif(s) de réglage en hauteur automatique(s) (17, 18, 19) de l'appareil ménager (7), est approprié afin de faire en sorte que le ou les dispositif(s) de réglage en hauteur automatique(s) (17, 18, 19) effectue(nt) automatiquement la mesure de réglage déterminée.

11. Produit de programme informatique, qui implémente sur un dispositif commandé par programme un dispositif de nivellement selon l'une des revendications 1 à 10.

12. Appareil ménager (7) avec un dispositif de nivellement selon l'une des revendications 1 à 10 intégré à l'appareil ménager.

13. Procédé de nivellement d'un appareil ménager (7) par un dispositif de nivellement selon l'une des revendications 1 à 10, avec les étapes : réception (S1) d'un signal (6) indiquant un positionnement de niveau de l'appareil ménager (7) issu d'un codeur de position externe à l'appareil ménager (7), détermination (S2) d'une mesure de réglage pour l'adaptation du positionnement de niveau de l'appareil ménager (7) indiqué par le signal (6) reçu, en utilisant le positionnement de niveau ainsi que des données préalablement connues au sujet de l'appareil ménager (7) et émission (S3) d'une instruction de manipulation, qui présente une réalisation de la mesure de réglage déterminée.

14. Procédé pour le nivellement d'un appareil ménager selon la revendication 13, dans lequel un dispositif (8) externe à l'appareil ménager (7), qui comprend au moins le codeur de position (5) externe à l'appareil ménager (7), est disposé dans une position de référence prédéfinie sur l'appareil ménager (7) et la mesure de réglage conformément à l'instruction de manipulation est exécutée manuellement par un utilisateur ou automatiquement par un ou plusieurs dispositif(s) de réglage en hauteur automatique(s) hydraulique(s) (17, 18, 19) de l'appareil ménager (7).
